# EUROPÄISCHE PATENTSCHRIFT

(11) **EP 1 983 726 B1**
(45) Veröffentlichungstag und Bekanntmachung des Hinweises auf die Patenterteilung: **18.08.2010**
(21) Anmeldenummer: 08405054.1
(22) Anmeldetag: 21.02.2008
(51) Int. Cl.: H04L 29/08

(54) **Verfahren und Vorrichtung zur selektiven Erzeugung und Übermittlung von Nachrichten**
Method and device for selective creation and transmission of messages
Procédé et dispositif destinés à la production et à la transmission sélectives d'informations

(30) Priorität: 25.02.2007 DE 102007009504
(43) Veröffentlichungstag der Anmeldung: 22.10.2008
(73) Patentinhaber: RUAG Electronics, 3000 Bern 22 (CH)
(72) Erfinder: Jaquier, Cyril, 8047 Zürich (CH); Lehmann, Pascal, 8173 Neerach (CH); Betschart, Erwin, 8006 Zürich (CH); Stoffel, Martin, 3932 Visperterminen (CH)
(74) Vertreter: Barth, Carl Otto

(56) Entgegenhaltungen:
- GB-A- 2 407 230
- US-A1- 2002 091 568
- US-B1- 6 470 386

## Beschreibung

### Gebiet der Erfindung

Die vorliegende Erfindung betrifft ein System zur "intelligenten" Erzeugung bzw. Übermittlung von Nachrichten, insbesondere Update-Nachrichten, in Nachrichtenübertragungsnetzen mit mobilen und/oder fest installierten Nachrichtensendern und -empfängern. Solche Nachrichten umfassen reine Textnachrichten, Bildnachrichten oder Kombinationen aus beiden, aber auch georeferenzierte Nachrichten, wie sie beispielsweise in der deutschen Patentanmeldung DE 10 2006 051 021.6 beschrieben sind. Da prinzipiell jedes Netz eine begrenzte Übertragungskapazität (Bandbreite) aufweist, hängt es von der Anzahl der Netzteilnehmer, der Grösse und Anzahl der zu übermittelnden Nachrichten und/oder erforderlichen oder gewünschten Update-Frequenz ab, wann die Grenze der Übertragungskapazität des Netzes erreicht ist.

### Hintergrund und Stand der Technik

Ein Beispiel für die Nachrichtenübertragung in einer Telekommunikationsinfrastruktur, insbesondere die erforderliche Übertragung von Update-Nachrichten zwischen Mobil- und Festgeräten sind Einsätze von Feuerwehren, technischen oder medizinischen Hilfsorganisationen, Polizei, Sicherheitspersonal, etc., bei denen insbesondere dann, wenn es sich um räumlich ausgedehnte Einsätze handelt, bei denen kein Sichtkontakt besteht, solche Nachrichten von grosser, oft entscheidender Bedeutung für die raumzeitliche Erfassung und Koordination von Einsätzen sind.

Bisher wurden solche Einsätze vorwiegend über Sprechfunk koordiniert, womit aber oft nur ein Teil der Information übermittelt werden konnte, was in kritischen Situationen fehleranfällig oder sogar unmöglich war. Viel besser eignen sich moderne Kommunikationsgeräte, z.B. Taschencomputer (Handhelds, Palmtops, PDAs) mit entsprechender Netzanbindung oder Mobilfunkgeräte mit geeigneten Zusatzeinrichtungen, wie sie auf dem Markt angeboten werden. Solche Geräte erlauben nicht nur die Übertragung von Bildern, die oftmals viel deutlicher als eine Sprachnachricht einen Sachverhalt darstellen, sondern auch die Erstellung und Übermittlung sog. georeferenzierter Nachrichten, die neben einer Text- oder Sprachnachricht auch präzise Ortsangaben, z.B. Koordinaten, enthalten. Diese komplexen, aus Sprachdaten, Bildern (Video oder Foto), Meldungen (Steuerung, Position und Befehlsdaten) bestehenden Nachrichten sind aber wesentlich grösser als reine Textnachrichten und ihre Übermittlung erfordert eine entsprechend grosse Übertragungskapazität (Bandbreite) des Netzes, insbesondere dann, wenn häufige Updates der Nachrichten erforderlich oder erwünscht sind. Die Anforderungen an Bandbreite und Verzögerung sind für die verschiedenen Datentypen sehr unterschiedlich und müssen beim Design der Telekommunikations-Infrastruktur berücksichtigt werden.

Besonders kritisch wird dies, wenn eine Situation mit grosser Dynamik eintritt, beispielsweise ein sich rasch ausbreitender Grossbrand in einer Chemiefabrik. Je dynamischer sich die Lage entwickelt, desto mehr Nachrichten fallen an in immer kürzeren Zeiträumen und desto wichtiger wird ihre zuverlässige Übermittlung. Zwangsläufig stösst man damit an Grenzen.

Um die Übertragungskapazität (Bandbreite) eines gegebenen Telekommunikations-Netzes optimal auszunutzen, stehen prinzipiell zwei Möglichkeiten zur Verfügung: Einerseits kann der Sender eine Beschränkung vornehmen, indem er die Zahl (bzw. Frequenz) oder die Grösse der Nachrichten einschränkt, andererseits kann der Empfänger nur bestimmte Nachrichten abfragen und damit die Netzbelastung in Grenzen halten.

Im McLain US-Patent 6 493 758 ist ein System beschrieben, bei dem von einem Host-Computer nur diejenige Information an ein Mobilgerät gesendet wird, für die das Mobilgerät eingerichtet ist. Dazu ermittelt der Host-Computer die technischen Charakteristika des Mobilgeräts und beschränkt die zu sendende Information entsprechend.

Ähnliches offenbart das Lusher et al. US-Patent 7 024 464. Dort ist ein System beschrieben, bei dem an eine Mobilgerät übermittelte Nachrichten in der Weise reduziert werden, dass ein selektiver Filter im Übertragungsweg die Übertragung auf die vom Empfänger vermutlich gewünschte Information begrenzt. Diese "gewünschte Information" ist definiert als die von allem Ballast wie Anzeigen, Banner, etc. befreite, insbesondere für den e-Commerce erforderliche Information, die sich auf einem PDA oder anderen Mobilgerät akzeptabel darstellen lässt. Der Nutzer selbst hat im Grunde keine Wahlmöglichkeit.

Ein weiteres Beispiel ist in der EP-Anmeldung 1 109 371 (Mousseau et al. US-Patent 6 477 529) beschrieben. Dort ist ein System gezeigt, bei dem von einem Sender über einen Gateway erst einmal alle Nachrichten unbeschränkt auf Mobilgeräte übertragen werden (broadcasting). Ein Mobilgerät empfängt alle Nachrichten, zeigt aber nur diejenigen an, für die es technisch eingerichtet ist. Der Nutzer des Mobilgeräts kann dann Typen der empfangenen Nachrichten auswählen, die er weiterhin empfangen möchte. Diese Auswahl wird dem Sender übermittelt, so dass dieser in der Folge nur die ausgewählten Nachrichten an diesen Empfänger sendet. Nachteilig ist, dass das Netz erst einmal mit allen Nachrichten belastet wird, bevor die Auswahl erfolgt, und dass, falls nur ein Mobilteilnehmer keine oder nur eine unbedeutend reduzierte Auswahl angibt, das Netz weiterhin hoch belastet bleibt.

Eine geografische Auswahl der zu übermittelnden Information ist im Lemelson et al. US-Patent 6 084 510 beschrieben. Neben einer Reihe anderer Kriterien ist für die Auswahl der von einem bestimmten Empfänger angezeigten Nachrichten dessen Standort massgebend, wobei letzterer mittels eines GPS-Systems im Empfänger bestimmt werden kann. Die Versendung der Nachrichten erfolgt aber an alle, die Auswahl erfolgt erst beim Empfänger, d.h. die Netzbelastung ist unverändert gross, ganz gleich, was der Empfänger anzeigt.

In der veröffentlichten Kraft et al. US Patentanmeldung US 2002/0 091 568 ist ein Verfahren zur personalisierten Verteilung von Werbung beschrieben, bei dem der Inhalt der an den Nutzer gesandten Werbung von seinem Profil und seinem Standort abhängt. Dazu ist der PDA des Nutzers mit einem GPS ausgerüstet und das Profil des Nutzers ist gespeichert. Der Standort des Nutzers wird per GPS ermittelt und übermittelt, worauf die personalisierte Werbung und ggf. eine Wegbeschreibung an den Nutzer gesendet werden. Bis auf die automatisierte Standort-Übermittlung ist dies ein Einweg-Verfahren, da die vom Inhalt wesentliche Information, d.h. die Werbebotschaft, nur in Richtung an den Nutzer übermittelt wird.

Ein prinzipiell ähnliches Verfahren ist in der veröffentlichen UK-Patentanmeldung GB 2 407 230 beschrieben. Ein Nutzer-PDA, dessen integriertes GPS Standortinformation an einen zentralen Server sendet, erhält von dort die in einer Datenbasis enthaltene, dem Standort zugeordnete Information. Diese wird gemäss einem gespeicherten Nutzerprofil ausgewählt und an diesen übermittelt. Der Nutzer kann dazu weitere Information abfragen, diese muss jedoch in der Datenbasis enthalten sein. Auch hier ist bis auf die automatisierte Standort-Übermittlung und ggf. möglichen Abfragen der Informationsfluss nur in einer Richtung wesentlich. Dazu kommt die weitere Einschränkung, dass die Datenbasis im Prinzip statischer Art ist.

Ein integriertes, Web-basiertes Monitorsystem ist im Combar et al. US-Patent 6 470 386 beschrieben. Dieses System schliesst ein grafisches User. Interface, GUI, in Form einer Webseite ein, die den Netzwerk-Verkehr und weitere, gemäss dem Nutzerprofil ausgewählte, statistische Daten dem Nutzer auf seiner Workstation in einem Browser darstellen. Diese Webseite wird über einen sicheren Übertragungskanal übermittelt und in einstellbaren, vorzugsweise regelmässigen Zeitabständen aufgefrischt. Zwar ist hierbei eine Realzeit-Anpassung der Webseite vorgesehen, aber es handelt sich auch hier im Prinzip um ein Einweg-Verfahren, da die wesentliche Information nur in Richtung an den Nutzer übermittelt wird.

Vom Gesagten ausgehend ist es Aufgabe der Erfindung, ein Verfahren und System zu schaffen, bei dem Nachrichten und Nachrichten-Updates so gestaltet, ausgewählt und übermittelt werden, dass eine gegebene Netzkapazität optimal ausgenutzt wird, wobei Auswahl und Häufigkeit (Frequenz) der zu übermittelnden Nachrichten und Nachrichten-Updates prinzipiell vom Benutzer gesteuert erfolgt und das Netz sich darauf einstellt.

### Die Erfindung

Die genannte Aufgabe löst die Erfindung im Prinzip in der Weise, dass von einem Benutzer (nachfolgend meist Client oder mobiler Teilnehmer) nur ausgewählte Nachrichten und/oder Nachrichten-Updates angefordert werden und/oder von einem Sender (nachfolgend meist Nachrichten-Server oder Zentrale) gesendet werden. Einmal bestimmt der Client (vorzugsweise mittels eines integrierten oder gekoppelten GPS-Systems) seine Koordinaten und ggf. seine Geschwindigkeit und übermittelt diese zusammen mit seiner Kennung an den Sender. Weiterhin bestimmt der Client einen "Filter" und übermittelt ihn zusammen mit seiner Kennung dem Sender, wobei der Filter einen Ausschnitt in Realweltkoordinaten und/oder ein Zeitintervall und ggf. weitere Daten enthält, die die zu übermittelnden Nachrichten und Nachrichten-Updates beschreiben oder identifizieren. Der Server speichert diesen Filter und verschickt nun ausschliesslich die Nachrichten, Änderungen bzw. Updates, welche innerhalb der im Filter spezifizierten Koordinaten und weiteren Bedingungen oder Grenzen stattfinden bzw. stattgefunden haben, an den betreffenden Client. Diesen Vorgang wiederholt der Sender im vorgegebenen Zeitabschnitt oder bis der Benutzer durch Übermittlung eines neuen Filters andere Nachrichten und Updates anfordert, indem er beispielsweise neue Koordinaten angibt oder auch die Übermittlung beendet.

Um dies weitgehend zu automatisieren, dient einerseits ein entsprechend der Erfindung ausgebildetes Verfahren, andererseits entsprechend der Erfindung eingerichtete und ausgerüstete Teilnehmer, d.h. mindestens eine Zentrale (Server) und mindestens ein mobiler Teilnehmer (Client). Beide sind Sende-Empfänger.

Die Zentrale (Server) ist dazu mit Speichereinrichtungen versehen, die für jeden Client den oder die Filter speichern und diese entsprechend den vom jeweiligen Client empfangenen Anweisungen ändern oder löschen können. Dazu führt die Zentrale eine globale Liste mit allen aktuellen Filtern.

Zusätzlich hält er für jeden Client eine eigene Liste mit Änderungen, die auf den in der letzten Anfrage enthaltenen Filter zutreffen. Mit der Liste der globalen Änderungen sowie dem übermittelten Filter, wird nach dem im Filter definierten Zeitintervall (oder bei einer erneuten Anfrage des Clients, wobei auch der Filter geändert haben kann) eine neue Liste mit Änderungen, welche auf den bisherigen, bzw. neuen Filter zutreffen, erstellt. Mit der neuen und der für diesen Client schon gespeicherten Liste kann die Zentrale nun die effektiv zu verschickenden Updates berechnen. Die Liste mit den alten Resultaten wird mit der neuen Liste überschrieben und für die nächste Anfrage gespeichert.

Weiterhin speichert die Zentrale (Server) alle tatsächlichen Positionen der Clients und ggf. deren Verlauf, also die Bewegung des oder der Clients.

Der Client seinerseits informiert die Zentrale über seine Kennung und seine Positions-Änderungen mit einer Rate, die durch seine Bewegungsgeschwindigkeit bestimmt wird. Diese Übermittlung erfolgt automatisch. Weiterhin übermittelt der Client seinen Status, der beispielsweise Werte wie "FREI", "BESETZT", "PAUSE", etc. annehmen kann und besagt, dass der Client z.B. in Wartestatus oder Standby oder im Einsatz ist oder gerade Pause hat. Diese Statusangabe und -übermittlung wird üblicherweise manuell erfolgen, kann aber zumindest teilweise automatisiert werden. Mit anderen Worten, Clients, also üblicherweise Einsatzkräfte, die nicht gerade aktiv mit einer Mission beschäftigt sind, belasten die eventuell knappen Ressourcen nicht, weder durch Senden noch durch unnötiges Abfragen von Informationen. Sinnvollerweise sollte die Update-Rate bei höherer Bewegungsgeschwindigkeit des Clients zunehmen, z.B. während schnellen Autofahrten oder Helikopterflügen. Auch wird es üblicherweise notwendig sein, häufiger Updates zu versenden, wenn sich ein Client in einer "kritischen Phase" eines Einsatzes befindet.

Der eigentliche Filter für die Auswahl der vom Server an den Client zu sendenden Nachrichten wird folgendermassen bestimmt. Als Beispiel sei hier ein Client in Gestalt eines PDA mit einer Kartendarstellung auf dem Display gegeben. Die Einsatzkraft, also der Benutzer des PDA-Client, stellt auf dem PDA dasjenige Gebiet als Karte ein, über das er eine Übersicht der vorhandenen Einsatzkräfte und der dort stattfindenden Vorgänge haben möchte. Die Koordinaten dieser Karte werden, zusammen mit der Kennung des PDA, automatisch als Filter an den Server gesandt. Dieser ermittelt daraufhin die Koordinaten und Kennungen aller im identifizierten Gebiet befindlichen Einsatzkräfte (deren Koordinaten werden ja automatisch an den Server übermittelt, s.o.) und ermittelt alle Nachrichten, die irgendwelche Vorgänge in dem identifizierten Gebiet betreffen. Diese Information wird an den PDA gesandt und auf dem Display dargestellt. Je nach Status und/oder Bewegung der Einsatzkraft und/oder Änderung des spezifizierten Gebiets und/oder der Nachrichten und/oder der anderen Einsatzkräfte werden im Server Update-Nachrichten erstellt und an den PDA gesandt und dargestellt. All dies erfolgt automatisch und ohne weitere Einflussnahme der Einsatzkraft. Sobald diese jedoch den Filter in irgendeiner Weise ändert, sei es, dass der Kartenausschnitt auf dem PDA oder der Status verändert wird, wird ein neuer Filter an den Server gesandt und dieser wählt die entsprechenden Daten aus und sendet sie mit der gewünschten oder gegebenen Update-Frequenz.

Die Vielfalt der zu übertragenden Nachrichten macht es sinnvoll, unterschiedliche Medien einzusetzen, für welche natürlich unterschiedliche Kommunikationsstrukturen notwendig oder optimal sind. Im Wesentlichen stehen vier Medientypen zur Diskussion:
- Video Streams
- Sprachdaten
- Bilder
- Meldungen (Positions- und Befehlsdaten)

Die verschiedenen Medientypen sollten vorteilhafterweise in einem Netzwerk übertragbar sein, dass als verteiltes System ausgebildet ist. Dabei gelten folgende Netzwerkanforderungen:

Auf Netzwerkebene wird für alle angeschlossenen Geräte davon ausgegangen, dass diese eine oder mehrere IP-Adressen verwenden und die Kommunikation somit IP-basiert abgewickelt werden kann. Für die Architektur wird lediglich der Aspekt der IP-Netze berücksichtigt. Angeschlossene Geräte ist hier universell verstanden und soll Server, Arbeitsstationen mit Diensten, Sensoren und Effektoren umfassen. Als Effektor wird hier z.B. eine fernsteuerbare Kamera verstanden, die man sowohl in der Richtung als auch im Zoomfaktor fernsteuern kann. Diese Kamera ist dann Sensor (als Aufnahmegerät) und Effektor (als steuerbares Gerät) zugleich.

Als Technologien stehen in erster Linie Fixnet/ADSL, GSM/GPRS/EDGE, UMTS, WLAN, Polycom und IMFS(+) zur Wahl.

Für die Anbindung von breitbandigen Applikationen (z.B. Video Streaming) und die Verbindung zwischen den Geräten/Teilnehmern wird vorzugsweise ein leistungsfähiges, permanentes TCP/IP Netzwerk benutzt. Für Sprachdaten und insbesondere Videostreams sind Punkt-zu-Punkt-Verbindungen zwischen dem "Produzenten" (Sender, Server, Mobilgerät) und dem "Konsumenten" (Empfänger, Client, Mobilgerät) notwendig. Dies liegt einerseits in den heutigen Streaming-Technologien, andererseits auch in den Anforderungen an die Bandbreite begründet. Ein zu übertragender Videostream darf das Gesamtsystem nicht beeinträchtigen. Für die Anbindung an einen ADS-95 Gateway kann z.B. eine ADSL-Verbindung genutzt werden.

Die Benutzeroberfläche, insbesondere die der Clients (Mobilgeräte), muss einfach und übersichtlich aufgebaut sein, sie wird üblicherweise eine graphische Darstellung einschliessen und menügesteuert sein.

Ähnliches gilt für die Benutzeroberfläche der Zentrale (auch Tactical Operations Center, TOC); sie wird ebenfalls eine graphische Darstellung einschliessen und menügesteuert sein, wobei Maus und Tastatur als Eingabegeräte dienen können. Vorzugsweise werden dort folgende Funktionen unterstützt:
- Aktuelles Lagebild mit Filtermöglichkeit
- Auftragsmanagement (Weg zum Ziel, Auftrag am Ziel)
- Soll- und Ist-Positionen
- Standort und Fähigkeit der Mittel
- Tracking von Objekten
- Zustand der befreundeten Mittel
- Zustand der eigenen Mittel
- Abweichung vom Standard
- Anzeigen von Alarmen
- Historyfunktion
- Nachrichtenaustausch
- Planungsunterstützung anzeigen
- Status der Einsatzmittel, Prognose

Diese Funktionen werden unten noch genauer beschrieben.

Wie bereits erwähnt, sind für Sprachdaten und insbesondere Videostreams Punkt-zu-Punkt-Verbindungen zwischen dem Sender und dem Empfänger notwendig. Dies liegt einerseits in den heutigen Streaming-Technologien begründet als auch in den Anforderungen an die Bandbreite. Schon daraus ergibt sich, dass ein zur Ausführung der Erfindung dienendes Telekommunikations-Netz für solche Punkt-zu-Punkt-Verbindungen geeignet sein muss.

Es ist auch möglich, mehrere parallel betriebene Netzwerke vorzusehen, die z.B. unterschiedliche Technologien und/oder Frequenzbereiche benutzen, sodass der Sender (Zentrale) für die Übermittlung das jeweils am besten geeignete Netz oder das Netz mit der geringsten Belastung ermittelt und benutzt. Damit kann die Übertragungssicherheit erheblich gesteigert werden.

Ein weiteres Erfordernis wird in vielen Fällen die zumindest für einen Teil der Nachrichten erforderliche Verschlüsselung sein.

Auf Netzwerkebene wird für alle Geräte im Netz die Kommunikation vorteilhaft IP-basiert abgewickelt, wobei die Geräte ein oder mehrere IP-Adressen verwenden. Für die verwendeten Protokolle können z.B. GPRS, UMTS, WLAN, IMFS(+), etc. verwendet werden.

Clients, d.h. die die Clients tragenden Einsatzkräfte, werden üblicherweise verschiedene Rollen wahrnehmen, sei es als Beobachter, Aufklärer, Aktive, Unterstützung oder dgl. Je nach Rolle sind unterschiedliche Zugangs- oder Abrufberechtigungen und/oder geographische Abhängigkeiten erforderlich, m.a.W., der Zugang zum System ist durch die Rolle des Clients definiert. Diese Rollen sind meist zeitlich beschränkt und ändern sich. Durch Rolle und Standort können sich Bedingungen ergeben, die sofort geändert werden müssen, z.B. macht die Übertragung von umfangreichen Bilddaten oder eines Videos nur Sinn, wenn der Client das nicht selbst sehen kann.

In vielen Fällen wird es notwendig oder vorteilhaft sein, Zertifikate zu verwenden, damit die Identität der Geräte sichergestellt werden kann. Ebenso wird häufig eine Verschlüsselung der Nachrichten angebracht sein. Für die Zertifikatverwaltung kann eine asymmetrische Verschlüsselung (Public Key Infrastructure, PKI) wie z.B. eines der RSA-Verfahren oder der A5-Verfahren eingesetzt werden. Es kann auch vorteilhaft sein, die Open Source PKI "Idealx" zu verwenden. Für Verschlüsselungen wird ein hybrides Verfahren vorzuziehen sein, also eine asymmetrische Verschlüsselung des Schlüssels und, wegen der schnelleren Verarbeitung, eine symmetrische Verschlüsselung der Nachricht. Die Verschlüsselung wird üblicherweise auf der Applikationsebene durchgeführt.

Ein entscheidender Punkt für die universelle Verwendung der vorliegenden Erfindung ist die Tatsache, dass handelsübliche Hardware verwendet werden kann, für die Clients also beispielsweise PDAs, PCs, Laptops und ähnliche Geräte, üblicherweise mit GPS-Fähigkeiten oder koppelbar mit GPS-Einrichtungen. Das erfindungsgemässe Verfahren, mindestens teilweise implementiert in Software, ermöglicht neuartige Funktionen und Einsatzbereiche der an sich bekannten Hardware.

Zusammengefasst kann man das erfindungsgemässe Verfahren als Methode zur Erzeugung, Auswahl und ggf. Häufigkeit der Übermittlung von Nachrichten in Übertragungsnetzen mit mindestens einem, meistens einer Vielzahl von mobilen Teilnehmern und mindestens einer Zentrale bezeichnen, wobei die Teilnehmer Nachrichtensender und -empfänger darstellen und der oder die mobilen Teilnehmer mit einer Positionsmesseinrichtung ausgerüstet ist bzw. sind. Dabei werden von jedem mobilen Teilnehmer Daten, zumindest über Position und Geschwindigkeit des mobilen Teilnehmers, an die Zentrale gesandt und von dieser gespeichert.

Ausserdem wird in jedem mobilen Teilnehmer ein Filter erstellt, der die von ihm gewünschten Nachrichten und die Häufigkeit der erforderlichen Updates definiert. Dieser Filter wird grösstenteils automatisch erstellt, an die Zentrale gesandt und dort gespeichert. Aus den ihr zur Verfügung stehenden Nachrichten wählt die Zentrale diejenigen aus, die dem Filter entsprechen und überträgt sie an den mobilen Teilnehmer.

Einzelheiten der Erfindung können der nachfolgenden Beschreibung der Funktionen und des/der Ausführungsbeispiels/e sowie den Patentansprüchen entnommen werden.

### Kurze Beschreibung der Zeichnungen

Nachfolgend sind Ausführungsbeispiele, insbesondere die Funktion der Erfindung, anhand von Zeichnungen detailliert beschrieben. Auf den Zeichnungen zeigen:
- Fig. 1: eine Übersicht der möglichen Wege einer Nachricht von einem Sender über einen Nachrichten-Server zu einem oder mehreren Empfängern;
- Fig. 2: eine Darstellung der automatischen Ermittlung der Update-Rate für Positionen und Übertragung vom Client zum Server;
- Fig. 3: eine Darstellung der automatischen Erstellung des Filters und dessen Übertragung vom Client zum Server;
- Fig. 4: eine Darstellung des Nachrichtenflusses vom Sender zum Empfänger;
- Fig. 5: eine Darstellung eines Ablaufs aufeinander folgender Abfragen eines Empfängers;
- Fig. 6: eine Darstellung der Applikation in den verschiedenen Ebenen;
- Fig. 7: eine schematische Darstellung des Vorganges zur automatischen Bestimmung der Rate für das Senden der eigenen Position;
- Fig. 8: eine schematische Darstellung des Vorganges zur automatischen Bestimmung des Filters für Update Nachrichten; und
- Fig. 9: eine schematische Darstellung des Vorganges bei Empfang einer Nachricht auf dem Server.

### Beschreibung eines Funktionsbeispiels

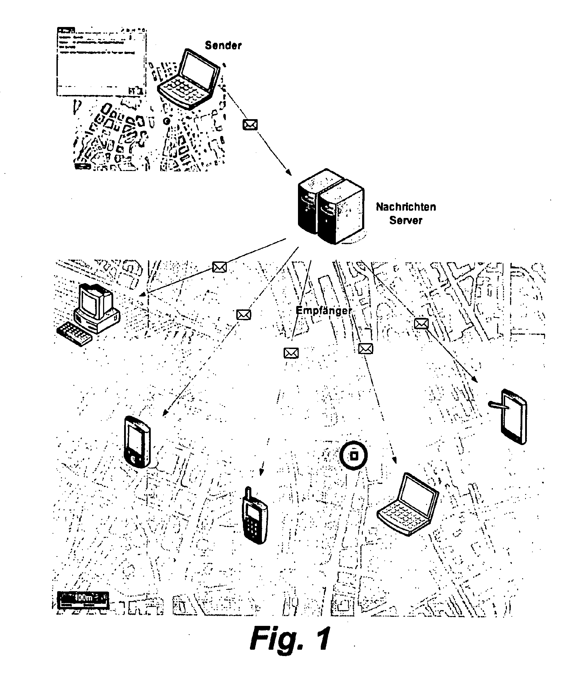

Fig. 1 zeigt ein typisches Bild der möglichen Wege einer Nachricht von einem Nachrichten-Sender (Sender) über einen Nachrichten-Server zu einem oder mehreren Empfängern. Sender und Server bilden die Zentrale und können, wie gezeigt, getrennt vorgesehen sein, aber auch am gleichen Ort installiert oder sogar integriert sein. Die Zentrale kann aber auch selbst mobil sein.

Empfänger oder Clients können sehr unterschiedliche Geräte sein, die meisten werden jedoch portabel sein: Wie gezeigt, sind dazu PCs, PDAs, Handies und Laptops geeignet. Im gezeigten Beispiel ist ausserdem eine Karte dargestellt, die einen markierten Punkt zeigt, auf den sich die übermittelte Nachricht bezieht, es handelt sich also um eine georeferenzierte Nachricht oder georeferenzierte Update-Nachricht, wie sie in vielen Anwendungen eine Rolle spielt und unten noch beschrieben wird.

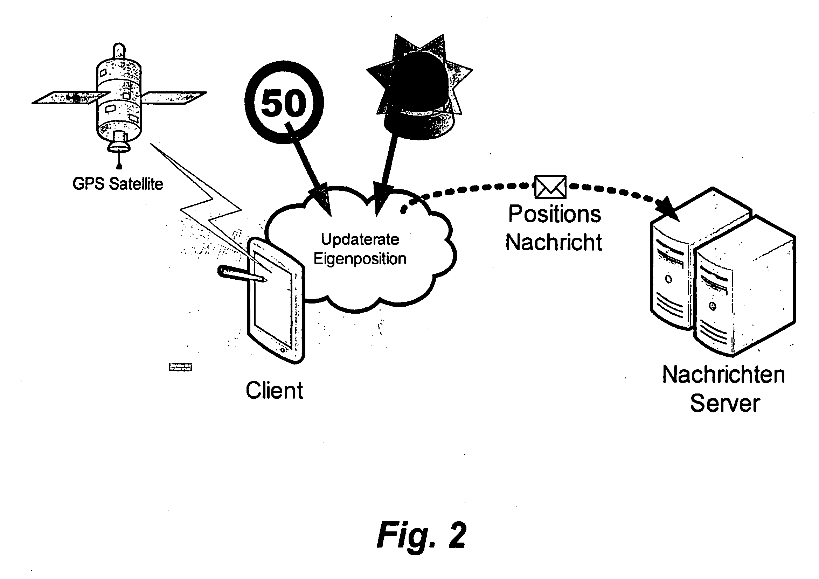

In Fig. 2 ist schematisch die automatische Ermittlung und Übertragung der Position und der Positions-Updates des Client dargestellt. Dazu wird anhand eines GPS-Empfängers, welcher in die Client-Hardware, den gezeigten PDA, eingebaut oder auch extern, z.B. über Bluetooth, angeschlossen sein kann, laufend die Position abgefragt und die Eigengeschwindigkeit des Client berechnet. Position, Geschwindigkeit und der momentane Status der Einsatzkraft, also des Benutzers, sowie der Status des Einsatzes, in der sich der Client befindet, wird bestimmt wie oben beschrieben, z.B. "FREI", "STANDBY". "BESETZT", "PAUSE" und an den Server übermittelt, zusammen mit der Kennung des Client. Aus der Eigengeschwindigkeit wird die Rate ermittelt, in der die Positions-Updates an den Nachrichtenserver geschickt werden. Typischerweise wird ein Positions-Update bei grösserer Geschwindigkeit häufiger erfolgen als bei einer sich fast nicht ändernden Position. Auch wird die Rate in einer "kritischen Phase" eines Einsatzes grösser sein als im normalen Zustand. Weiter wird ein Client, der im Moment nicht aktiv am Einsatz beteiligt ist, sondern sich auf "STANDBY" oder "PAUSE" befindet, seltener ein Update an den Server schicken.

Mit anderen Worten, als ersten Schritt übermittelt der Client Positions- und Statusdaten an den Server, wobei diese Daten von seiner Bewegungsgeschwindigkeit und seinem Status abhängen.

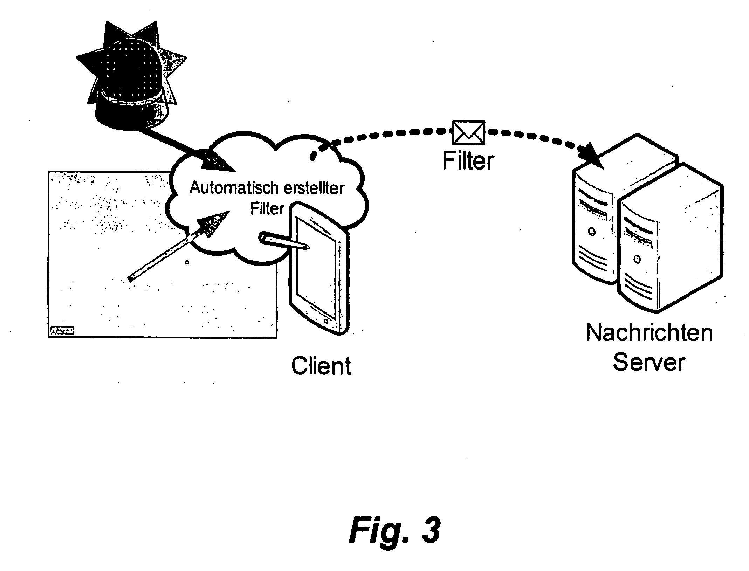

Als nächsten Schritt erstellt und übermittelt der Client einen zweiten Input, der als Filter für die Auswahl und die Berechnung oder Bestimmung der Nachrichten und Updates durch den Server dient. Fig. 3 stellt diese automatische Erstellung und Übermittlung dieses zweiten Inputs an den Nachrichten-Server dar. Der zweite Input ist einerseits eine Koordinatenangabe, die das Gebiet betrifft, über das der Client informiert sein will und enthält üblicherweise einen Ausschnitt in Realweltkoordinaten. Meist wird er das Gebiet identifizieren, in welchem sich ein Einsatz abspielt (z.B. der Kartenausschnitt, der auf der Client-Hardware ausgewählt ist - nicht notwendigerweise die Position des Client) und/oder das (engere) Gebiet in welchem sich der Client zur Zeit aufhält. Weiter enthält der Filter ein Zeitintervall mit welchem der Client festlegt, in welchen Zeitabständen er vom Server über Updates informiert werden möchte. Im Gegensatz zur o.g. sozusagen automatischen Status-Übermittlung gibt hier der Client seinen bewussten Input bezüglich der Informationsfrequenz an den Server.

Typischerweise wird natürlich der Zeitabstand kleiner bzw. die gewünschte Informationsfrequenz höher sein bei einem Client, der sich gerade aktiv in einer kritischen Phase eines Einsatzes befindet, als bei einem Nichtbeteiligten. Der zweite Input ist demnach in erster Linie durch den Informationsbedarf des Client gesteuert.

Sollte die Zentrale (Server), bedingt durch hohe Netzlast, nicht in der gewünschten Frequenz Updates an den Client schicken können, wird das Zeitintervall für die Sendungen verlängert, d.h. es werden weniger Nachrichten per Zeiteinheit versandt.

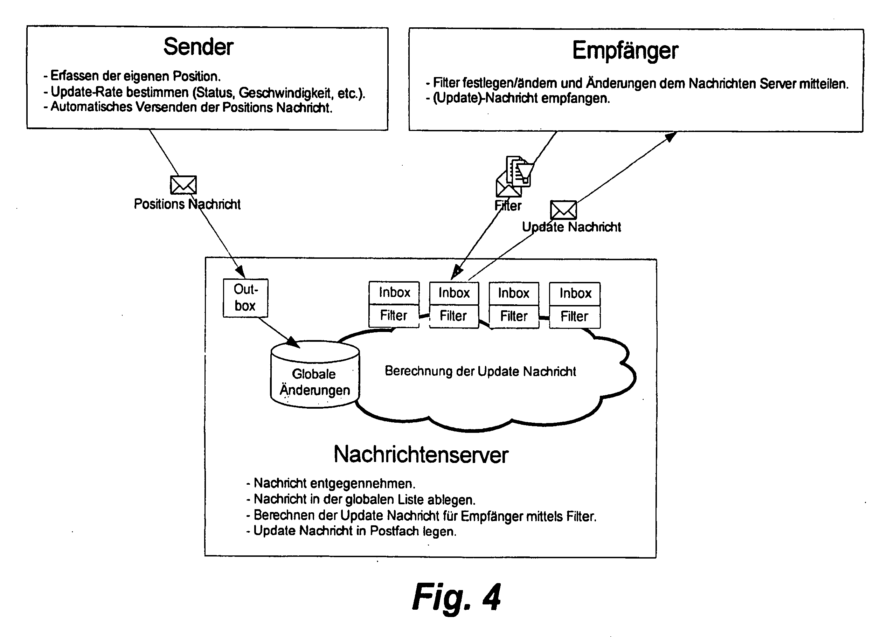

In Fig. 4 ist ein typischer Aufbau eines erfindungsgemässen Übertragungsnetzes dargestellt. Der mobile Teilnehmer besitzt einen Sendeteil, hier als "Sender" bezeichnet, und einen Empfangsteil, hier als "Empfänger" bezeichnet. Die Zentrale ist der "Nachrichtenserver". Der Nachrichtenfluss erfolgt einerseits vom Sender des Client zum Nachrichten-Server, sowie von letzterem zum Empfänger des Client entsprechend des vorgängig vom Client übermittelten bzw. eingestellten Filters. Der Nachrichtenserver führt eine Liste mit globalen Änderungen und berechnet mit dem vom Client eingestellten Filter sowie den bereits an den Client gesendeten Nachrichten diejenigen Updates, die an den Client zu versenden sind.

### Im Einzelnen sind folgende Funktionen in Fig. 4 dargestellt:

Der Sender erfasst, üblicherweise mittels eines GPS-Systems, seine Position und übermittelt sie zusammen mit einer Geschwindigkeits- und/oder Statusangabe automatisch an den Nachrichtenserver. Dieser speichert die empfangenen Daten, so dass bei jeder Anfrage, die das Gebiet betrifft, in dem sich der Client befindet, dessen Koordinaten und Kennung übermittelt werden kann.

Der Nachrichtenserver hält in seinem Speicher, in der "globalen Liste", auch alle empfangenen Nachrichten, d.h. aus verschiedenen Quellen stammende Nachrichten über Geschehnisse, Anweisungen, Bewegungen, etc. Diese liegen als Sprache, Schrift, Standbild, Video, etc., also in allen denkbaren Formen vor. Mittels des von jedem Client-Empfänger erstellten und individualisierten Filters werden nun für jeden Empfänger diejenigen Nachrichten oder Nachrichten-Updates ausgewählt, die seinem Filter entsprechen. Es ist zu beachten, dass in Fig. 4 nur ein einziger Empfänger dargestellt ist, jedoch Filter und Inboxen für vier Empfänger. In die dem gezeigten Empfänger zugeordnete Inbox werden also die gemäss dem zugeordneten Filter ermittelten Nachrichten bzw. Updates abgelegt und können nun vom Empfänger abgerufen werden.

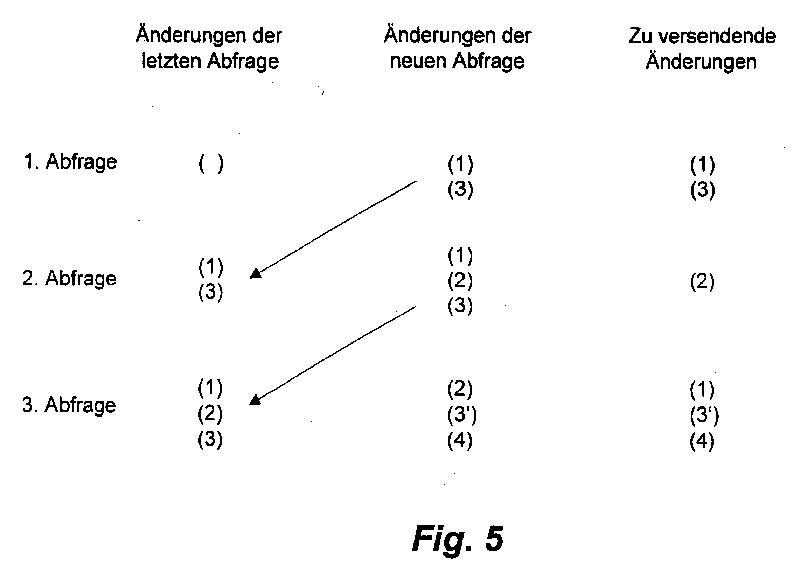

Fig. 5 zeigt den Ablauf aufeinander folgender Abfragen eines mobilen Teilnehmers (Client), an die Zentrale (Nachrichtenserver) in einem Beispiel. Es wird vorausgesetzt, dass der Client seinen Filter übermittelt hat, d.h. dem Sender den gewünschten Ausschnitt in Realweltkoordinaten und ein Zeitintervall für zu übermittelnde Nachrichten und Updates übermittelt hat. Der Nachrichtenserver hat diesen Filter gespeichert und verschickt nun alle Änderungen bzw. Updates, welche innerhalb der im Filter spezifizierten Koordinaten und sonstigen Filter-Bedingungen stattgefunden haben, an den betreffenden Empfänger, d.h. legt sie in dessen Inbox, wie in Fig. 4 gezeigt.

In Bezug auf die 1. Abfrage ist beim Nachrichtenserver noch kein Update gespeichert, also wird die "komplette" Nachricht bzw. Änderung (Teilnachrichten 1 und 3, zweite Spalte) gesendet. Bei der nachfolgenden 2. Abfrage durch den Client stellt der Nachrichtenserver fest, dass die Teilnachrichten 1 und 3, die er vorher übermittelt hat und deren Übermittlung er gespeichert hat (erste Spalte), unverändert sind und eine neue, noch nicht übermittelte Teilnachricht 2 existiert (zweite Spalte). Daraufhin wird vom Nachrichtenserver nur diese Teilnachricht 2 als Update gesendet. Der Client ist nun im Besitz aller derzeit verfügbaren Teilnachrichten 1, 2 und 3; der Nachrichtenserver hat dieses "Muster" wiederum gespeichert (erste Spalte). Zum Zeitpunkt der 3. Abfrage existieren die alte Teilnachricht 2, eine geänderte Teilnachricht 3, bezeichnet mit 3', und eine neue Teilnachricht 4. Die alte Teilnachricht 1 ist nicht mehr gültig. Also müssen die Löschung der Teilnachricht 1, die geänderte Teilnachricht 3' und die neue Teilnachricht 4 übermittelt werden.

### Beschreibung einer Implementierung

Die nachfolgende Applikationsbeschreibung ist in der für Software-Beschreibungen üblichen Terminologie abgefasst. Die benutzten Begriffe bedürfen daher keiner weiteren Erläuterung.

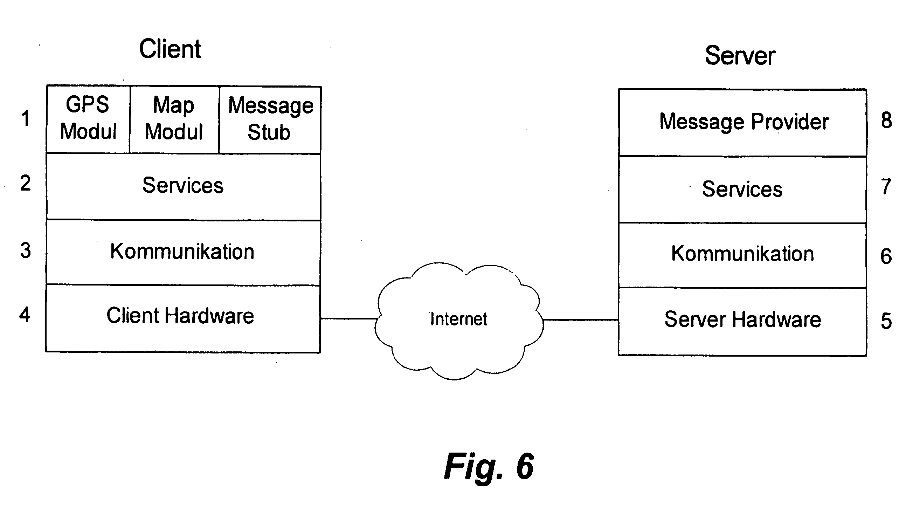

Fig. 6 zeigt den Aufbau der Applikation in den verschiedenen Ebenen. Der Message Stub in Schicht (Layer) 1 ist für die Erfassung und Verarbeitung der Nachrichten auf dem Client zuständig.

Für die Bestimmung der Rate, mit welcher der Client seine eigene Position dem Server mitteilt, wird das GPS-Modul verwendet. Das GPS-Modul liefert bei genügender Abdeckung mit GPS-Satelliten die eigene Position bis auf wenige Dezimeter genau, bestehend aus Längengrad, Breitengrad und Höhe. Die Geschwindigkeit, mit welcher sich der Client bewegt kann nun einerseits mit der Formel v = s/t berechnet werden oder direkt über das GPS-Modul abgefragt werden.

Das Map-Modul liefert die Realweltkoordinaten des aktuellen Kartenausschnittes, welche für die Ermittlung des aktuellen Filters verwendet werden. Siehe dazu die obige Beschreibung eines Beispiels des erfindungsgemässen Verfahrens.

Die Nachrichten werden zum Versenden an die Service-Schicht 2 übertragen, welche die Verbindung zur Kommunikations-Schicht 3 darstellt. In der Kommunikations-Schicht wird die Nachricht codiert und gegebenenfalls verschlüsselt und dann über die Client-Hardware 4 an den Server verschickt. Wie oben beschrieben, erfolgt die Kommunikation IP-basiert über das Internet.

Die Server-Hardware 5 nimmt die Daten-Pakete entgegen und leitet diese zur Entschlüsselung und Decodierung an die Kommunikations-Schicht 6 weiter.

Über die Service-Schicht 7 gelangt die Nachricht schlussendlich zum Message Provider 8. Der Message Provider verwaltet die Inboxes ("Postfächer") der einzelnen Clients und ist für die Speicherung der globalen Änderungen sowie der auf den Client zugeschnittenen Update-Nachrichten und des zugehörigen Filters zuständig.

Schickt der Server eine Nachricht oder eine Update-Nachricht an einen Client, wird der beschriebene Weg in der umgekehrten Richtung durchlaufen.

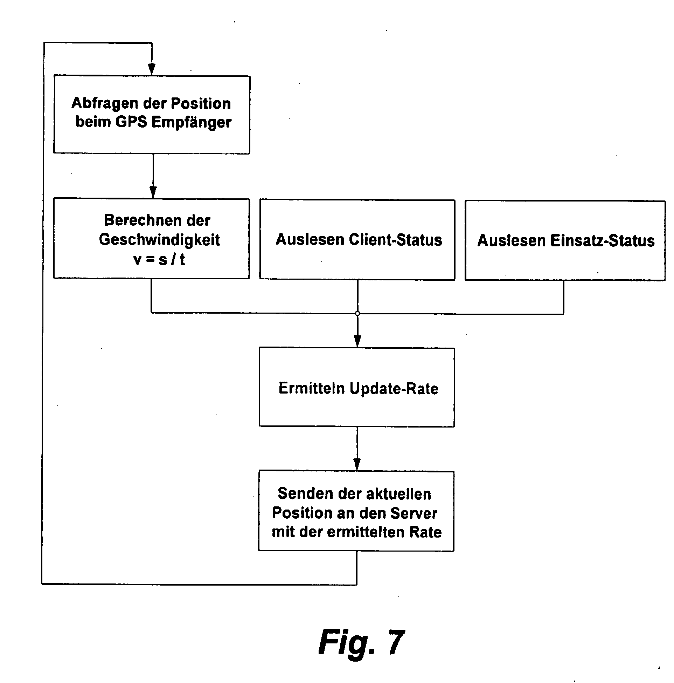

In Fig. 7 ist der Vorgang der automatischen Bestimmung der Update-Rate für die Position des Clients als Ablaufdiagramm dargestellt. Dazu wird der GPS-Empfänger über das GPS-Modul periodisch abgefragt. Die erhaltenen Positionen dienen mit v = s/t zur Bestimmung der Geschwindigkeit, mit welcher sich der Client bewegt. Anhand des Status, den der Client (Client-Status) und die Mission (Einsatz-Status) gerade aufweisen, wird die Rate für Positions-Updates an den Nachrichtenserver ermittelt. Der Client wird bei aktiver Teilnahme an einem Einsatz, sowie in einer kritischen Phase des Einsatzen und bei hoher Eigengeschwindigkeit die Update-Rate erhöhen, wie oben bereits erwähnt.

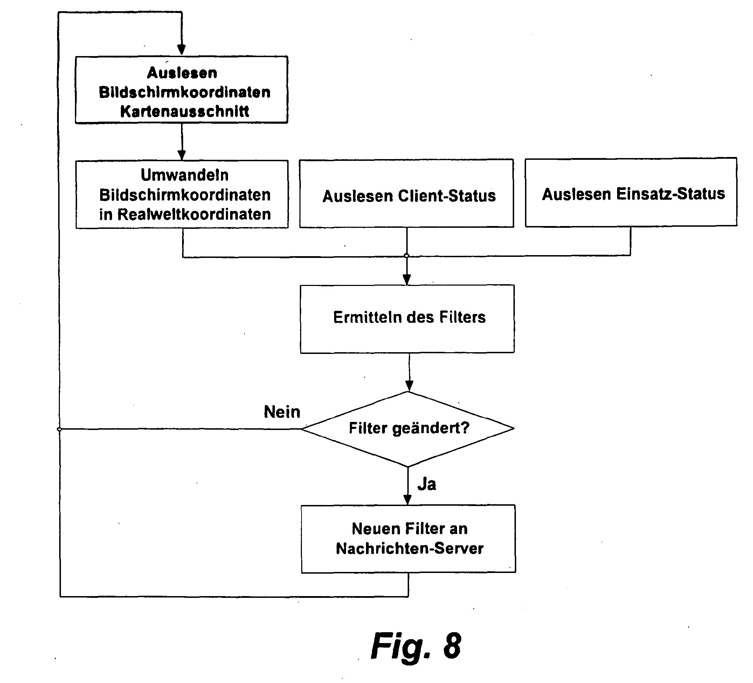

Fig. 8 stellt den Vorgang zur automatischen Ermittlung des Filters für Nachrichten, an welchen die Einsatzkraft (der Client) interessiert ist oder sein könnte, dar. Dazu wird der gerade angezeigte, von der Einsatzkraft eingestellte Kartenausschnitt in Realweltkoordinaten umgesetzt und zusammen mit dem Status des Clients sowie dem Status des Einsatzes verrechnet. Die im Filter gesetzten Koordinaten begrenzen die zu empfangenden Nachrichten geographisch während der Client-Status bzw. Einsatz-Status das Zeitintervall im Filter festlegen, mit welchem der Client vom Server über Updates informiert werden möchte/soll. Bei einer kritischen Phase eines Einsatzes und einer aktiven Teilnahme der Einsatzkraft (des Clients) an diesem wird das Zeitintervall für Nachrichten-Updates kürzer ausfallen, d.h. die Update-Frequenz höher sein, um das Geschehen auf dem Client so aktuell wie möglich wiedergeben zu können.

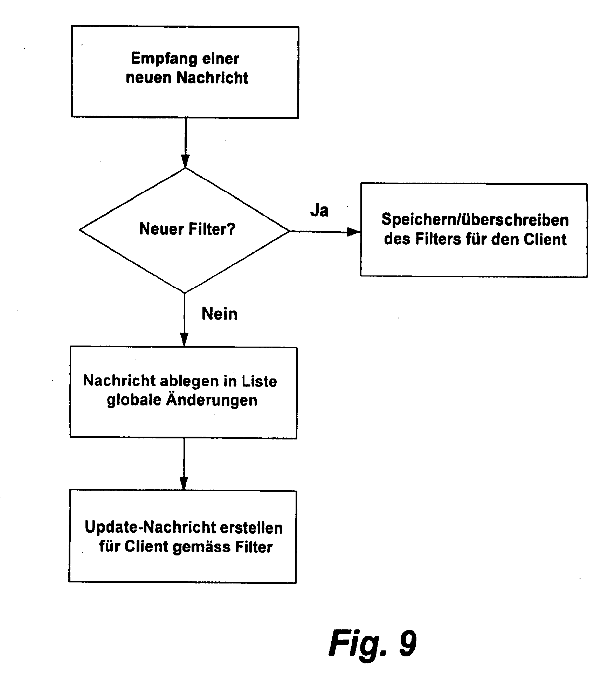

Fig. 9 zeigt den Ablauf auf dem Nachrichten-Server bei Eingang einer neuen Nachricht. Zuerst wird geprüft, um welche Art der Nachricht es sich handelt. Ist es eine Filter-Nachricht, so wird der gespeicherte Filter des entsprechenden Clients, dessen Kennung mit der Nachricht übertragen wird, überschrieben. Alle nachfolgend an diesen Client gesendeten Nachrichten oder Updates werden mit den neuen Filtereinstellungen erstellt.

Ist es keine Filter-Nachricht, so wird die Nachricht in einer globalen Liste, die praktisch eine grosse Datenbank darstellt, mit allen anderen Nachrichten abgelegt. Aus den in der globalen Liste vorhandenen Nachrichten, dem Client-Filter und den vorher an den Client gesendeten Informationen werden, wie in Fig. 5 dargestellt und im Zusammenhang beschrieben ist, die Update-Nachrichten für jeden Client erstellt und für den Versand in dessen Postfach abgelegt. Die Updates werden dann mit dem im Filter angegebenen Zeitintervall an den Client verschickt.

Sollte das Kommunikationsnetz nicht die nötige Übertragungs-Kapazität aufweisen, um den Client im gewünschten Zeitabstand zu informieren, wird der Server dieses Intervall selber auf einen passenden Wert erhöhen, d.h. die Update-Frequenz entsprechend absenken.

Es gibt offensichtlich eine Vielzahl von weiteren Modifikationen, die für die Fachperson ohne erfinderisches Zutun ermittelt und implementiert werden können; die nachfolgenden Patentansprüche sollen auch diese Modifikationen mit umfassen.

## Patentansprüche

1. Verfahren zur Erzeugung und Auswahl zu übermittelnder Nachrichten in einem Übertragungsnetz mit mindestens zwei mobilen Teilnehmern. Mobilgeräten, mit jeweils eigener Kennung-und einer Positionsbestimmungseinrichtung, und mindestens einem zentralen Teilnehmer, Zentrale, wobei alle Teilnehmer mittels Sende-Empfängern über das Übertragungsnetz kommunizieren, ***gekennzeichnet durch** folgende Schritte:*
- in einem Mobilgerät wird ein Filter erstellt, der die von der Zentrale zu übermittelnden Nachrichten bestimmt, wobei dieser Filter eine erste Statusangabe enthält, die die Häufigkeit bzw. Frequenz der von der Zentrale an dieses Mobilgerät zu übermittelnden oder von diesem abrufbaren Nachrichten bzw. Nachrichten-Updates bestimmt,
- der Filter wird von dem Mobilgerät mit seiner Kennung an die Zentrale übermittelt und von dieser gespeichert,
- das Mobilgerät ermittelt fortlaufend seine Positions- und Geschwindigkeits-Daten und sendet diese mit seiner Kennung an die Zentrale,
- die Zentrale wählt aus den ihr zur Verfügung stehenden Nachrichten fortlaufend diejenigen aus, die dem jeweiligen Filter entsprechen, und
- die Zentrale übermittelt die mittels des Filters ausgewählten Nachrichten an das **durch** die jeweilige Kennung identifizierte Mobilgerät bzw. stellt sie für dieses Mobilgerät auf Abruf zur Verfügung.

2. Verfahren nach Anspruch 1, ***dadurch gekennzeichnet, dass*** in der Zentrale jede Nachricht, die dem Filter eines bestimmten Mobilgeräts entspricht, daraufhin überprüft wird, ob sie in ihrer Gesamtheit oder Teile von ihr bereits übermittelt wurden, und nur neue, noch nicht übermittelte Nachrichten oder Teile davon als Nachrichten-Updates übermittelt bzw. bereitgestellt werden.

3. Verfahren nach Anspruch 1 oder 2, ***dadurch gekennzeichnet, dass*** der in jedem Mobilgerät erstellte Filter frei wählbare Koordinaten-Daten und/oder eine Zeitintervall enthält.

4. Verfahren nach Anspruch 1, ***dadurch gekennzeichnet, dass*** die Eingabe der ersten Statusangabe beim Mobilgerät manuell und deren Übermittlung an die Zentrale automatisch erfolgt.

5. Verfahren nach Anspruch 1, ***dadurch gekennzeichnet, dass*** die Zentrale für das Mobilgerät eine weitere Statusangabe bestimmt, die von der Dynamik des erfassten Geschehens in der Umgebung der Position dieses Mobilgeräts abhängt und Häufigkeit bzw. Frequenz der von der Zentrale an dieses Mobilgerät übermittelten oder von diesem abrufbaren Nachrichten bzw. Nachrichten-Updates bestimmt.

6. Verfahren nach mindestens einem der vorhergehenden Ansprüche,
***dadurch gekennzeichnet, dass***
im Mobilgerät die Ermittlung der Positions- und Geschwindigkeits-Daten und/oder die Erstellung des Filters und die Übermittlung an die Zentrale automatisch erfolgt.

7. Verfahren nach mindestens einem der vorhergehenden Ansprüche,
***dadurch gekennzeichnet, dass***
für die Übertragung ein Breitband-Netzwerk vorgesehen ist, das die vorzugsweise parallele Übertragung verschiedener Nachrichtenformen, die Textmeldungen, Sprachdaten, Standbilder und Video Streams einschliessen, ermöglicht.

8. Verfahren nach mindestens einem der vorhergehenden Ansprüche,
***dadurch gekennzeichnet, dass***
auf einem Display des Mobilgeräts eine Karte darstellbar ist, deren Koordinaten als Filter oder Bestandteil des Filters automatisch an die Zentrale übermittelt werden.

9. Verfahren nach mindestens einem der vorhergehenden Ansprüche,
***dadurch gekennzeichnet, dass***
die Häufigkeit bzw. Frequenz der zu übertragenden oder bereitzustellenden Nachrichten oder Nachrichten-Updates je nach Belastung des Übertragungsnetzes entweder gleichmässig verändert, d.h. erhöht oder vermindert wird, oder in Abhängigkeit vom Status des anzusprechenden Mobilgeräts verändert wird.

10. Verfahren nach mindestens einem der vorhergehenden Ansprüche,
***dadurch gekennzeichnet, dass***
- die Zentrale jede eingehende Nachricht daraufhin prüft, ob sie ein neuer Filter ist oder eine andere Nachricht darstellt, worauf
- wenn es sich um einen neuen Filter handelt, der im Speicher enthaltene bisherige Filter des betreffenden Mobilgeräts mit dem neuen Filter überschrieben wird, oder
- wenn es sich um eine andere Nachricht handelt, Nachrichten für diejenigen Mobilgeräte erstellt werden, deren Filter diese Nachricht einschliesst.

11. Verfahren nach mindestens einem der vorhergehenden Ansprüche,
***dadurch gekennzeichnet, dass***
für die Übertragung mehrere Netzwerke vorgesehen sind, die parallel betrieben werden und die Zentrale das jeweils am besten geeignete Netz oder das Netz mit der geringsten Belastung ermittelt und für die Übermittlung der Daten benutzt.

12. Verfahren nach mindestens einem der vorhergehenden Ansprüche,
***dadurch gekennzeichnet, dass***
zumindest ein Teil der Nachrichten oder Nachrichten-Updates verschlüsselt übertragen wird.

13. Anordnung zur Erzeugung und Auswahl zu übermittelnder Nachrichten mit mindestens zwei mobilen Teilnehmern, Mobilgeräten, mit jeweils eigener Kennung und einer Positionsbestimmungseinrichtung und mindestens einem zentralen Teilnehmer, Zentrale, wobei alle Teilnehmer mittels Sende-Empfängern über ein Übertragungsnetz kommunizieren, ***gekennzeichnet durch**:*
- ein Mobilgerät mit
- Mitteln zur Erstellung eines Filters, der die von der Zentrale zu übermittelnden Daten bestimmt, wobei dieser Filter eine erste Statusangabe enthält, die die Häufigkeit bzw. Frequenz der von der Zentrale an dieses Mobilgerät zu übermittelnden oder von diesem abrufbaren Nachrichten bestimmt,
- Mitteln zur Übertragung dieses Filters mit der Kennung des Mobilgeräts an die Zentrale und
- einer Positionsmesseinrichtung und Mitteln zur vorzugsweise fortlaufenden automatischen Übertragung ermittelter Positionsdaten mit der Kennung des Mobilgeräts an die Zentrale und
- einer Zentrale mit
- einem Speicher zur Speicherung des dem Mobilgerät zugeordneten Filters,
- Mitteln zur Auswahl derjenigen Nachrichten aus allen zur Verfügung stehenden Nachrichten, die dem Filter des Mobilgeräts entsprechen, und
- Mitteln zur Übertragung der ausgewählten Nachrichten an das **durch** seine Kennung identifizierte Mobilgerät.

14. Anordnung nach Anspruch 13, ***dadurch gekennzeichnet, dass*** die Zentrale aufweist
- erste Speichermittel, die jede an ein bestimmtes Mobilgerät übermittelte Nachricht aufzeichnet,
- Vergleichsmittel, die jede neue, dem Filter des bestimmten Mobilgeräts entsprechende Nachricht daraufhin überprüft, ob sie in ihrer Gesamtheit oder Teile von ihr bereits übermittelt wurden, und
- zweite Speichermittel, die nur neue, noch nicht übermittelte Nachrichten oder Teile davon als Nachrichten-Updates zur Übermittlung bereitstellt.

15. Anordnung nach Anspruch 13, ***dadurch gekennzeichnet, dass*** die Zentrale aufweist
- Prüfmittel, die jede Nachricht daraufhin prüft, ob sie ein neuer Filter ist oder eine andere Nachricht darstellt,
- Steuermittel für den Speicher, die, wenn es sich um einen neuen Filter handelt, den im Speicher enthaltenen bisherigen Filter des betreffenden Mobilgeräts mit dem neuen Filter überschreibt, und
- Steuermittel für die Erstellung von Update-Nachrichten, die, wenn es sich um eine andere Nachricht handelt, eine Update-Nachrichten für dasjenige Mobilgerät erstellt, dessen Filter diese Nachricht einschliesst.

## Claims

1. Method for generating and selecting messages to be transmitted in a transmission network with at least two mobile subscribers, mobile devices, each with their own identification character and a position determining device, and at least one central subscriber, central unit, wherein all subscribers communicate by means of transmitter/receiver devices via the transmission network, **characterized by** the following steps:
- a filter is created in a mobile device, said filter determining the messages to be transmitted by the central unit, wherein said filter contains a first status specification, which determines the frequency or incidence of the messages or message updates to be transmitted by the central unit to said mobile device or of the messages or message updates that can be called up by said mobile device,
- the filter is transmitted to the control unit by the mobile device with its identification character and is stored by said control unit,
- the mobile device continuously determines its positional and speed data and sends it with its identification character to the central unit,
- the central unit continuously selects from the messages made available to it those that correspond to the respective filter, and
- the central unit transmits the messages selected by means of the filter to the mobile device identified by the respective identification character or makes them available to said mobile device when called up.

2. Method according to Claim 1, **characterized in that** in the central unit each message that corresponds to the filter of a certain mobile device, is checked as to whether it has already been transmitted in its entirely or whether parts thereof have already been transmitted, and only new messages or parts thereof that have not yet been transmitted are transmitted or prepared as message updates.

3. Method according to Claim 1 or 2, **characterized in that** the filter created in each mobile device contains freely selectable coordinate data and/or a time interval.

4. Method according to Claim 1, **characterized in that** the input of the first status specification is effected manually at the mobile device and its transmission to the central unit is effected automatically.

5. Method according to Claim 1, **characterized in that** the central unit determines another status specification for the mobile device, said status specification depending on the dynamics of the event detected in the surrounding area of the position of said mobile device and determining frequency or incidence of the messages or message updates transmitted by the central unit to said mobile device or of the messages or message updates that can be called up by said mobile device.

6. Method according to at least one of the preceding claims, **characterized in that** the determining of the position and speed data and/or the creating of the filter and the transmitting to the central unit is effected automatically in the mobile device.

7. Method according to at least one of the preceding claims, **characterized in that** a broadband network is provided for the transmission, preferably enabling parallel transmission of different message forms, which include text messaging, voice data, still images and video streams.

8. Method according to at least one of the preceding claims, **characterized in that** a card can be shown on a display of the mobile device, the coordinates of which card being automatically transmitted to the central unit as the filter or a component of the filter.

9. Method according to at least one of the preceding claims, **characterized in that** the frequency or incidence of the messages or message updates to be transmitted or prepared is modified, i.e. increased or reduced, depending on the load of the transmission network either in an equal manner or is modified as a function of the status of the mobile device to be addressed.

10. Method according to at least one of the preceding claims, **characterized in that**
- the central unit checks each in-coming message to see whether it is a new filter or provides another message, whereupon
- if it is a new filter, the filter of the relevant mobile device held up to now in the memory is overwritten by the new filter, or
- if it is another message, messages are created for those mobile devices whose filters are included in this message.

11. Method according to at least one of the preceding claims, **characterized in that** a plurality of networks is provided for the transmission, said networks being operated in parallel and the central unit determining the best suited network or the network with the lowest load in each case and using it for the transmission of the data.

12. Method according to at least one of the preceding claims, **characterized in that** at least part of the messages or message updates is transmitted in a coded manner.

13. Arrangement for generating and selecting messages to be transmitted with at least two mobile subscribers, mobile devices, each with their own identification character and a position determining device and at least one central subscriber, central unit, wherein all subscribers communicate by means of transmitter/receiver devices via a transmission network, **characterized by**:
- a mobile device with
- means for creating a filter, which determines the data to be transmitted by the central unit, wherein said filter contains a first status specification which determines the frequency or incidence of the messages to be transmitted by the central unit to said mobile device or of the messages that can be called up by said mobile device,
- means for the transmission of said filter with the identification character of the mobile device to the central unit and
- a position measuring device and means for the preferably continuous automatic transmission of determined position data with the identification character of the mobile device to the central unit and
- a central unit with
- a memory for storing the filter associated with the mobile device,
- means for selecting, from all messages that are available, those messages that correspond to the filter of the mobile device and
- means for transmitting the selected messages to the mobile device identified by its identification character.

14. Arrangement according to Claim 13, **characterized in that** the central unit has
- first storage means which records each message transmitted to a certain mobile device,
- comparing means which checks each new message corresponding to the filter of the certain mobile device as to whether said message has already been transmitted in its entirety or in part and
- second storage means which prepares only new messages, not yet transmitted, or parts thereof, for transmission as message updates.

15. Arrangement according to Claim 13, **characterized in that** the central unit has
- checking means that checks each message as to whether it is a new filter or provides another message,
- control means for the memory, which, if it is a new filter, overwrites the filter of the relevant mobile device held up to now in the memory by the new filter and
- control means for creating update messages which, if it is another message, creates an update message for that mobile device whose filter is included in said message.

## Revendications

1. Procédé pour produire et sélectionner des informations à transmettre sur un réseau de transmission comprenant au moins deux participants mobiles, ou appareils mobiles, ayant chacun son propre identifiant et un dispositif de détermination de position, et au moins un participant central, ou centrale, tous les participants communiquant au moyen d'émetteurs-récepteurs via le réseau de transmission, ***caractérisé par** les étapes suivantes :*
- dans un appareil mobile est généré un filtre qui détermine les informations à transmettre par la centrale, ce filtre contenant une première indication d'état qui détermine la fréquence des informations ou, selon le cas, des mises à jour d'informations à transmettre par la centrale à cet appareil mobile ou pouvant être appelées par celui-ci,
- le filtre est transmis par l'appareil mobile avec son identifiant à la centrale et mémorisé par celle-ci,
- l'appareil mobile détermine continuellement ses données de position et de vitesse et les envoie avec son identifiant à la centrale,
- la centrale sélectionne continuellement parmi les informations qui sont à sa disposition celles qui correspondent au filtre respectif, et
- la centrale transmet les informations sélectionnées au moyen du filtre à l'appareil mobile identifié par l'identifiant respectif ou, selon le cas, les rend disponibles sur appel pour cet appareil mobile.

2. Procédé selon la revendication 1, ***caractérisé en ce que***
dans la centrale, chaque information qui correspond au filtre d'un appareil mobile défini est vérifiée pour déterminer si elle a déjà été transmise dans son intégralité ou en partie, et seules des informations ou parties de celles-ci nouvelles, non encore transmises, sont transmises ou mises à disposition en tant que mises à jour d'informations.

3. Procédé selon la revendication 1 ou 2, ***caractérisé en ce que***
le filtre généré dans chaque appareil mobile contient des données de coordonnées pouvant être librement choisies et/ou un intervalle de temps.

4. Procédé selon la revendication 1, ***caractérisé en ce que***
l'entrée de la première indication d'état est effectuée manuellement sur l'appareil mobile et sa transmission à la centrale automatiquement.

5. Procédé selon la revendication 1, ***caractérisé en ce que***
la centrale détermine pour l'appareil mobile une autre indication d'état qui dépend de la dynamique des événements détectés aux environs de la position de cet appareil mobile et détermine la fréquence des informations ou, selon le cas, des mises à jour d'informations transmises par la centrale à cet appareil mobile ou pouvant être appelées par celui-ci.

6. Procédé selon au moins une des revendications précédentes, ***caractérisé en ce que*** dans l'appareil mobile, la détermination des données de position et de vitesse et/ou la génération du filtre et la transmission à la centrale ont lieu automatiquement.

7. Procédé selon au moins une des revendications précédentes, ***caractérisé en ce que*** pour la transmission il est prévu un réseau à large bande qui permet la transmission de préférence en parallèle de différentes formes d'informations qui incluent des messages textuels, des données vocales, des images fixes et des flux vidéo.

8. Procédé selon au moins une des revendications précédentes, ***caractérisé en ce que*** sur un écran de l'appareil mobile peut être représentée une carte dont les coordonnées sont transmises automatiquement à la centrale en tant que filtre ou de composante du filtre.

9. Procédé selon au moins une des revendications précédentes, ***caractérisé en ce que*** la fréquence des informations ou mises à jour d'informations à transmettre ou à mettre à disposition varie en fonction de la charge du réseau de transmission, c'est-à-dire augmente ou diminue, soit régulièrement, soit en fonction de l'état de l'appareil mobile à contacter.

10. Procédé selon au moins une des revendications précédentes, ***caractérisé en ce que***
- la centrale contrôle chaque information entrante pour déterminer s'il s'agit d'un nouveau filtre ou si elle représente une autre information, après quoi
- s'il s'agit d'un nouveau filtre, le filtre actuel de l'appareil mobile concerné contenu en mémoire est remplacé par le nouveau filtre, ou
- s'il s'agit d'une autre information, des informations sont générées pour les appareils mobiles dont le filtre inclut cette information.

11. Procédé selon au moins une des revendications précédentes, ***caractérisé en ce que*** pour la transmission il est prévu plusieurs réseaux qui sont exploités en parallèle et la centrale détermine à chaque fois le réseau le mieux approprié ou le réseau le moins chargé et l'utilise pour la transmission des données.

12. Procédé selon au moins une des revendications précédentes, ***caractérisé en ce que*** au moins une partie des informations ou mises à jour d'informations est transmise de manière cryptée.

13. Dispositif pour produire et sélectionner des informations à transmettre comprenant au moins deux participants mobiles, ou appareils mobiles, ayant chacun son propre identifiant et un dispositif de détermination de position, et au moins un participant central, ou centrale, tous les participants communiquant au moyen d'émetteurs-récepteurs via un réseau de transmission, ***caractérisé par** :*
- un appareil mobile comportant
- des moyens pour générer un filtre qui détermine les données à transmettre par la centrale, ce filtre contenant une première indication d'état qui détermine la fréquence des informations à transmettre par la centrale à cet appareil mobile ou pouvant être appelées par celui-ci,
- des moyens pour transmettre ce filtre avec l'identifiant de l'appareil mobile à la centrale et
- un dispositif de mesure de position et des moyens pour la transmission automatique de préférence continuelle des données de position déterminées avec l'identifiant de l'appareil mobile à la centrale et
- une centrale comportant
- une mémoire pour mémoriser le filtre associé à l'appareil mobile,
- des moyens pour sélectionner parmi toutes les informations disponibles les informations qui correspondent au filtre de l'appareil mobile, et
- des moyens pour transmettre les informations sélectionnées à l'appareil mobile identifié par son identifiant.

14. Dispositif selon la revendication 13, ***caractérisé en ce que***
la centrale présente
- un premier moyen de mémorisation qui enregistre chaque information transmise à un appareil mobile défini,
- un moyen de comparaison qui vérifie chaque nouvelle information correspondant au filtre de l'appareil mobile défini pour déterminer si elle a déjà été transmise dans son intégralité ou en partie, et
- un deuxième moyen de mémorisation qui met à disposition pour transmission seulement des informations ou parties de celles-ci nouvelles, non encore transmises, en tant que mises à jour d'informations.

15. Dispositif selon la revendication 13, ***caractérisé en ce que***
la centrale présente
- un moyen de contrôle qui contrôle chaque information pour déterminer si elle représente un nouveau filtre ou une autre information,
- un moyen de commande pour la mémoire qui, quand il s'agit d'un nouveau filtre, remplace, en l'écrasant, le filtre actuel de l'appareil mobile concerné contenu en mémoire par le nouveau filtre, et
- un moyen de commande pour générer des informations de mise à jour qui, quand il s'agit d'une autre information, génère une information de mise à jour pour l'appareil mobile dont le filtre inclut cette information.
